# FASCICULE DE BREVET EUROPEEN

(11) **EP 1 613 561 B1**
(45) Date de publication et mention de la délivrance du brevet: **13.12.2006**
(21) Numéro de dépôt: 04710055.7
(22) Date de dépôt: 11.02.2004
(51) Int. Cl.: C03B 33/09, B23K 26/00, B32B 17/10

(54) **VITRAGE COMPRENANT DES LIGNES DE RUPTURE**
VERGLASUNG MIT SOLLBRUCHLINIEN
GLAZING COMPRISING BREAK LINES

(30) Priorité: 12.02.2003 DE 10305733
(43) Date de publication de la demande: 11.01.2006
(73) Titulaire: SAINT-GOBAIN GLASS FRANCE, 92400 Courbevoie (FR)
(72) Inventeur: OEHRLEIN, Alexander, D-52134 Herzogenrath (DE)
(74) Mandataire: Colombier, Christian
(86) Numéro de dépôt international: PCT/FR2004/000304
(87) Numéro de publication internationale: WO 2004/074193

(56) Documents cités:
- DE-A- 19 957 317
- US-A1- 2001 028 390

## Description

L'invention se rapporte à un procédé pour produire des zones de rupture intentionnellement prévues dans des vitres, présentant les caractéristiques du préambule de la revendication 1.

Dans la demande de brevet allemand antérieure 102 25 555.5-21, on décrit des vitres feuilletées avec des zones de rupture intentionnellement prévues à utiliser dans des véhicules (comme pare-brise ou vitres de toit). En cas de heurt d'un piéton, d'un cycliste, ... impliqué dans une collision avec le véhicule, la vitre feuilletée cède nettement plus facilement sous le choc que les vitres feuilletées conventionnelles, de sorte que l'intensité du choc est fortement atténuée et que les risques de blessure sont minimisés.

Dans la demande de brevet précitée, on discute de nombreuses possibilités bien connues pour produire de telles zones de rupture intentionnellement prévues ; il est fait référence ici à ces considérations.

Selon la demande antérieure, un affaiblissement de la vitre est produit de préférence par la création d'un gradient de contrainte localement limité, c'est-à-dire d'un état de contrainte hétérogène dans le verre, qui réduit de façon ciblée et localement limitée la résistance à la rupture du verre. Le gradient de contrainte est présent aussi bien sur l'épaisseur du verre que sur la surface du verre. Sous une charge, due par exemple à une courbure de la vitre, et dépassant une mesure déterminée, la résistance est dépassée dans la zone du gradient de contrainte et la vitre se brise.

Un gradient de contrainte localement limité peut être créé par un chauffage local de la vitre au-delà de sa température de transformation suivi d'un refroidissement rapide. Ce procédé de précontrainte thermique est largement répandu, mais dans les procédés connus, la vitre entière est chauffée et trempée de façon homogène. Le chauffage local peut être effectué par exemple à l'aide d'un laser ou d'une flamme de gaz.

Sous le lien internet "http://www.vitro.de", on décrit un procédé avec lequel des structures spatiales visibles, par exemple des portraits de personnes, sont réalisées dans des corps de verre au moyen d'un dispositif à laser commandé par un ordinateur et un robot. Manifestement, une modification de la structure est provoquée par surchauffe par une focalisation appropriée du rayonnement laser à des profondeurs de pénétration déterminées.

Le DE 199 57 317 enseigne des lignes de rupture perpendiculaires par rapport au vitrage, lequel ne pouvant pas offrir de comportement différent selon la face sollicitée par un choc.

Le problème à la base de l'invention est de proposer un autre procédé, avec lequel on peut créer dans une vitre des modifications locales de la structure favorisant la rupture de celle-ci en cas de surcharge, avec un comportement différent selon la face sollicitée de la vitre.

Conformément à l'invention, ce problème est résolu avec les caractéristiques de la revendication 1. Les caractéristiques des revendications dépendantes indiquent des perfectionnements avantageux de l'invention.

Un procédé tel que le procédé mentionné plus haut, adapté pour des décorations et des reproductions, en vue de la déstructuration locale de corps de verre à l'aide d'un rayonnement énergétique focalisable à différentes profondeurs de pénétration sous la conduite d'un programme, en particulier d'un rayonnement laser, peut être utilisé conformément à l'invention pour la fabrication de zones de rupture intentionnellement prévues dans des vitres. De façon particulièrement avantageuse, la progression de la rupture peut en l'occurrence être prédéterminée de façon très précise en formant des microfissures dans la masse du verre, d'une façon un peu comparable à une perforation. Toutefois, cette déstructuration ne doit pas nécessairement affecter la surface de la vitre, comme ce serait le cas par exemple avec des éraflures bien connues. Au contraire, le procédé conforme à l'invention permet de provoquer un affaiblissement interne de la ou des vitre(s) à une distance adéquate, plus ou moins faible, des deux surfaces.

Une méthode usuelle pour produire ces microfissures est la focalisation d'impulsions laser dans la matière transparente. Pourtant, on pourrait également imaginer une surchauffe uniquement par une irradiation continue (fonctionnement du laser à onde continue), qui produit des fissures de contrainte. Dans la région du foyer, ou bien il se produit une surchauffe due à l'absorption résiduelle du verre à la longueur d'onde du laser utilisé, ou bien les liaisons dans le verre sont brisées par effet photochimique par l'absorption de plusieurs photons en une fois (absorption multiple de photons), respectivement des parties de la matrice du verre sont ionisées et éclatent ensuite.

Par la focalisation d'un laser ayant une longueur d'onde de par exemple 1064 nm ou 532 nm (typiques dans le domaine infrarouge [laser Nd : YAG] et dans le domaine visible), le verre est brusquement détruit localement dans une zone de quelques micromètres à moins de cent micromètres, de telle façon qu'il reste dans le verre des microfissures, le long desquelles le verre se brise lors d'un choc ultérieur.

Si l'on fait maintenant courir sur le verre un faisceau laser focalisé avec une vitesse telle que les foyers des impulsions individuelles se positionnent séparément dans le verre, on peut alors décrire comme suit l'aspect d'un tel point de microdommage individuel :
Etant donné que la structure grossière d'un tel point de fissuration est en général analogue à une image de la répartition de l'intensité au foyer (la matière a été déplacée, détruite ou transformée là où l'intensité du laser était encore suffisamment grande), on peut se représenter un tel point de microdommage sous une forme analogue à une hyperbole tournant autour de l'axe des ordonnées (analogue à un sablier). Cet aspect provient du fait qu'un faisceau laser homogène focalisé possède en général une striction d'épaisseur minimale (le diamètre d'un faisceau laser focalisé au point le plus étroit est toujours fini), semblable à l'étroit conduit entre les deux ampoules d'un sablier.

La disposition spatiale des zones d'affaiblissement ou de moindre résistance dans le corps de verre et leur taille et/ou leurs dimensions peuvent ainsi être définies de façon très précise. Il est en outre également possible de régler de façon ciblée un tracé de la zone d'affaiblissement sur l'épaisseur de la vitre. Certes, la zone d'affaiblissement ou de moindre résistance peut pénétrer en profondeur perpendiculairement à la surface. Ceci n'est cependant pas absolument nécessaire. Au contraire, l'application des technologies et des dispositifs connus en soi permet de réaliser un tracé complexe de l'affaiblissement à travers l'épaisseur de la vitre. En particulier, il est possible de créer une sorte de structure d'affaiblissement, de forme générale de cône (ou de coin), avec laquelle le comportement à la rupture est différent selon la direction d'action de la sollicitation menant à la rupture. Le terme cône ne doit pas être pris dans son sens de forme géométrique exacte (bien que cela ne soit pas exclut). Il signifie que les lignes d'affaiblissement à travers la tranche du vitrage sont divergentes lorsqu'on parcourt le périmètre du vitrage. Notamment, comme le vitrage comprend généralement quatre côtés principaux, on peut dire que les lignes sont essentiellement divergentes deux-à-deux, c'est-à-dire qu'il existe deux groupes de deux lignes d'affaiblissement, chaque ligne de chaque groupe étant placée de l'autre côté du vitrage par rapport à l'autre ligne du même groupe et étant divergente par rapport à elle dans la tranche du vitrage. Le fait que les lignes d'affaiblissement soient obliques (ou inclinées) par rapport à la normale perpendiculaire au vitrage confère au vitrage un comportement au choc différent selon que le choc frappe sur une face ou sur l'autre face du vitrage (généralement soit la face concave soit la face convexe). Cet effet commence en fait même dès qu'une ligne d'affaiblissement est au moins partiellement oblique (ou inclinée) par rapport à la tranche du vitrage. Il n'est donc pas indispensable que l'intégralité de la ligne d'affaiblissement soit oblique sur l'intégralité du périmètre du vitrage.

Ainsi l'invention concerne en premier lieu un procédé pour produire des zones de rupture intentionnellement prévues dans une vitre, dans lequel on provoque des surchauffes locales de la structure du verre à l'aide d'un faisceau énergétique pénétrant dans le verre, dans lequel on produit les zones de rupture intentionnellement prévues (5) en guidant séquentiellement le faisceau selon un tracé prédéterminé (ligne 3) suivant le tracé préféré de la rupture de la vitre (1) ainsi qu'en focalisant séquentiellement le faisceau aussi bien le long de ce tracé (ligne 3) qu'à différentes profondeurs par rapport à la surface de la vitre (1), la focalisation séquentielle à différentes profondeurs de pénétration suivant une ligne inclinée et/ou courbe par rapport à la normale à la surface du verre de telle façon que l'on crée dans la vitre une structure d'affaiblissement, afin d'obtenir un comportement de rupture de la vitre (1) différent en fonction de la direction d'action de la sollicitation conduisant à la rupture. La définition de l'invention qui vient d'être donnée recouvre le fait que la ligne d'affaiblissement peut n'être courbe ou inclinée qu'au moins partiellement.

Les zones d'affaiblissement peuvent en outre être réalisées non seulement de manière continue, mais aussi sous la forme de lignes interrompues ou pointillées avec des interruptions à la manière d'une perforation, respectivement d'une distribution de points en trois dimensions. De même, on peut imaginer des microfissures seulement à une profondeur déterminée de la vitre. Ces mesures favorisent la réalisation de la condition selon laquelle une vitre "affaiblie" de la sorte ne se brise dans tous les cas que lors de l'application d'une surcharge sensible.

Pour influencer l'évolution ultérieure de la rupture, on peut en outre adapter l'inclinaison d'un faisceau laser incident par rapport à la forme de la vitre (c'est-à-dire une inclinaison déterminée par rapport à la normale à la vitre au point de façonnage), de telle façon qu'une direction de fissuration, apparue de préférence à un tel point de microdommage obtenu par la focalisation d'un laser, soit superposée au tracé ultérieur souhaité de la fissure de telle façon que ces fissures se propagent de la façon souhaitée lors d'une rupture ultérieure de la vitre.

Le procédé peut également être appliqué sans difficulté dans le cas de vitres feuilletées, c'est-à-dire avant ou après l'assemblage des vitres en un produit fini. La couche de colle entre les vitres rigides d'un tel produit composite peut en l'occurrence être dissociée de l'affaiblissement. Ainsi, on conserve une résistance à la pénétration suffisante contre une tentative d'effraction, malgré l'affaiblissement de la vitre.

On peut par exemple assurer que cette même vitre, par exemple un pare-brise d'un véhicule, soit relativement souple en cas de rupture à la suite du choc d'un corps provenant du côté extérieur et capte ce corps au sens de l'invention antérieure, mais qu'en même temps un passager du véhicule la heurtant depuis le côté intérieur du véhicule soit protégé de façon sûre contre le risque d'être éjecté hors du véhicule.

Les zones de rupture intentionnellement prévues dans le verre, respectivement leur tracé, peuvent être visibles ou invisibles, selon l'énergie ou la puissance du faisceau énergétique. Dans le cas de zones de rupture visibles, on peut cependant si nécessaire les masquer à la vue, dans les zones proches du bord des vitres traitées, par des cadres colorés opaques qui sont d'un usage généralisé dans les vitres de véhicules.

Les dommages causés dans le verre par le laser peuvent être répartis en dommages visibles et dommages invisibles.

Les dommages visibles dans le verre sont produits lorsque l'énergie du rayonnement ou la puissance du rayonnement est tellement grande ("rayonnement supérieur au seuil") qu'un dommage, par exemple des microfissures, visible (à l'oeil nu) est survenu à l'endroit traité par le rayonnement. En l'espèce, un seuil déterminé de l'énergie et/ou de la puissance, qui est caractéristique du milieu traité par le rayonnement, (et qui peut par ailleurs dépendre également de l'histoire antérieure de l'endroit traité) a été dépassé et il s'est créé une structure de fissure.

On parle de dommages invisibles dans le verre lorsque l'énergie du rayonnement ou la puissance du rayonnement n'est pas suffisamment élevée ("rayonnement inférieur au seuil") pour provoquer un dommage visible (pas à l'oeil nu mais au microscope optique), mais qu'il se produit un dommage visible par une exposition répétée du même endroit à un "rayonnement inférieur au seuil", par l'action d'une sollicitation thermique ou mécanique ("fatigue de la matière").. Pour la production de zones de rupture invisibles, on peut utiliser la technique décrite dans "Statistical study of single and multiple pulse laser-induced damage in glasses", Optics Express, 16 décembre 2002, vol. 10, n° 25, p. 1465. Les mécanismes intervenant ici ne sont pas encore compris exactement, mais on considère en général qu'un dommage dans le verre survient dans une zone exposée du verre d'abord à l'endroit de "précurseurs" (amorces de l'endroit ultérieurement endommagé dans le verre). Ces "précurseurs" peuvent être des défauts, des impuretés ou des centres de couleur. On doit cependant noter qu'il n'était en aucun cas dans le but des auteurs de cet article de créer un affaiblissement quelconque du support soumis au rayonnement.

Il est évident que les dommages préalables dont il est question ici doivent être visibles au moins au microscope, parce qu'il s'agit de caractéristiques importantes pour la sécurité des vitres concernées, qui doivent être conformes aux procédures nationales d'homologation et qui doivent dès lors pouvoir être vérifiées par des tiers à un coût acceptable.

D'autres détails et avantages de l'objet de l'invention découleront des dessins de quelques exemples de réalisation et de leur description détaillée qui suit.

Dans ces dessins en représentation simplifiée :
- la Fig. 1: est une vue d'une vitre, le long du bord de laquelle une zone d'affaiblissement périphérique a été produite ;
- la Fig. 2: montre une coupe transversale à travers une vitre pourvue de zones d'affaiblissement ;
- la Fig. 3: présente un ensemble de différents tracés possibles de zones d'affaiblissement sur l'épaisseur d'une vitre.
- La Fig. 4: montre une vue d'une vitre, le long du bord de laquelle une zone d'affaiblissement pas totalement périphérique a été produite.

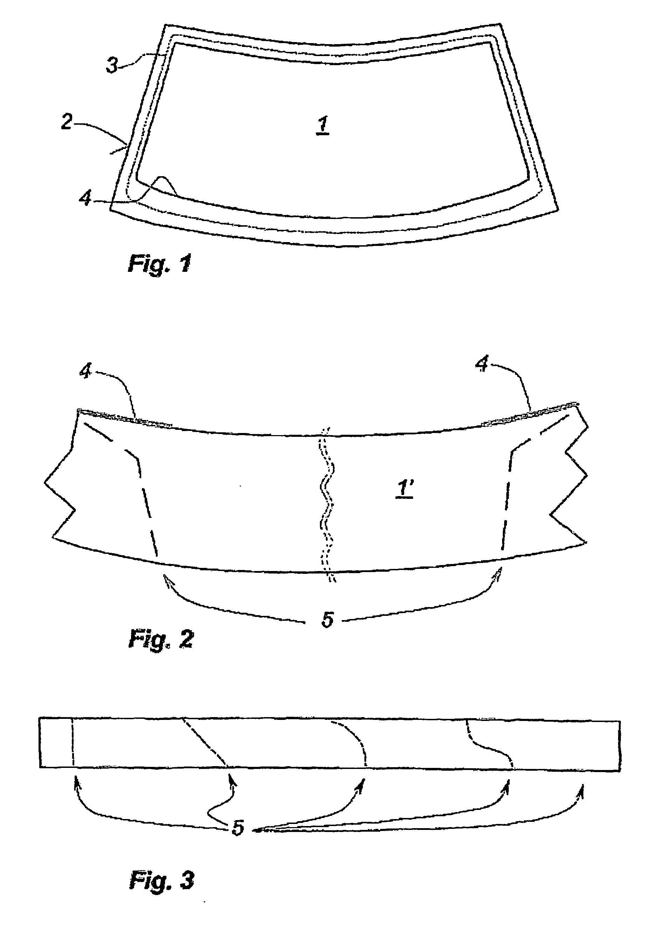

Selon la Fig. 1, une vitre 1 réalisée en tant que pare-brise de véhicule est pourvue d'une zone d'affaiblissement 3 s'étendant le long de son bord extérieur 2 et indiquée par une ligne interrompue. Dans la vitre réelle 1, cette zone est recouverte par une bande de peinture colorée opaque 4, dont on ne peut voir ici que le bord intérieur.

On précise explicitement que ce procédé peut naturellement être appliqué également pour le façonnage de vitres à employer dans des bâtiments.

Dans la Fig. 2, on voit que l'on a créé des microfissures 5 dans deux groupes disposés à droite, respectivement à gauche de deux fines lignes en trait mixte, dans la masse du verre d'une vitre monolithique 1' représentée ici par un seul petit fragment. Au total, celles-ci peuvent former une zone d'affaiblissement périphérique 3 du type illustré dans la Fig. 1.

L'objectif de l'invention peut cependant aussi être atteint lorsque l'on produit dans une telle vitre seulement au moins 2 zones d'affaiblissement ou lignes d'affaiblissement situées en face l'une de l'autre, qui ne sont pas tracées sur la totalité de la périphérie de la vitre, à la différence de la représentation de la Fig. 1. Elles peuvent être prévues à proximité du bord, par exemple uniquement le long des deux courtes arêtes latérales ou uniquement le long des deux longues arêtes latérales de la vitre 1, et elles s'étendent alors de préférence jusqu'au bord extérieur de celle-ci. Elles enferment entre elles une région de la surface de la vitre 1. Dans une coupe à travers la vitre, on obtient alors sensiblement l'image visible dans la Fig. 2.

On voit que les microfissures 5 n'affectent pas les surfaces de la vitre 1, mais qu'elles se trouvent exclusivement à l'intérieur de la masse de verre.

En outre, elles ne sont pas réalisées en continu, mais comme une ligne interrompue avec des interruptions à la manière d'une perforation. Même dans le tracé longitudinal de la zone d'affaiblissement 3, les microfissures ne doivent pas obligatoirement être continues.

Enfin, la Fig. 2 montre également que les microfissures 5 suivent à l'intérieur de l'épaisseur de la vitre un tracé coudé et incliné par rapport à la perpendiculaire ou à la normale respective sur la surface de la vitre. Les groupes de microfissures situés à droite et à gauche l'un en face de l'autre sont en l'occurrence orientés en sens contraire. Au total, il se forme ainsi entre les groupes de microfissures une pièce (un débris) de rupture avec un contour de rupture sensiblement en forme de cône ou de coin, c'est-à-dire ayant des surfaces divergentes. Ces surfaces divergentes se trouvent deux à deux de part et d'autre de la pièce (la ligne d'affaiblissement 5 à droite et la ligne d'affaiblissement 5 à gauche divergent). Sous l'action d'une force menant à la rupture à partir du côté concave de la vitre 1', on observe un comportement de rupture différent de celui qui correspond à une force agissant à partir du côté convexe de la vitre 1'. Dans ce dernier cas, la vitre sera plus souple, tandis que l'on peut dans le premier cas s'attendre à un certain effet de soutien, qui résulte du recouvrement des arêtes de rupture de part et d'autre dans le sens de la force. Pour le cas d'application concret, les tracés des microfissures et des zones d'affaiblissement doivent naturellement être optimisés par des essais ; la disposition illustrée ici sans échelle particulière ne sert que pour une illustration symbolique schématique.

Une réaction de rupture différente selon la direction d'action peut être obtenue lorsque l'on conduit les microfissures jusque dans la surface sur une des faces de la vitre, lorsqu'on les fait cependant se terminer plus ou moins loin avant d'atteindre la surface dans l'autre face. Manifestement, ceci équivaut à une fêlure (au moins partielle) dans la surface concernée et favorise la propagation de la fissure le long et à partir de cette surface préalablement endommagée.

La Fig. 3 montre encore toute une série de variantes de configurations, dans lesquelles des microfissures 5 peuvent être formées dans des vitres ; tout à fait à gauche, on montre un tracé rectiligne qui est perpendiculaire à la surface de la vitre, et à droite de celui-ci un tracé rectiligne incliné à environ 45° par rapport aux surfaces (ici, les extrémités des fissures s'étendent jusqu'à la surface), et ensuite deux tracés courbes différents. Enfin, tout à fait à droite, on a représenté un unique "point de microdommage". Une série de tels points isolés, particulièrement peu visibles, à former selon le tracé de la ligne 3 dans la Fig. 1 peut dans certains cas suffire pour atteindre l'effet souhaité. Toutes ces configurations et de nombreuses autres variantes peuvent être réalisées de façon reproductible avec le procédé au faisceau laser, à relativement peu de frais, d'une façon fortement mécanisée à la machine et en peu de temps.

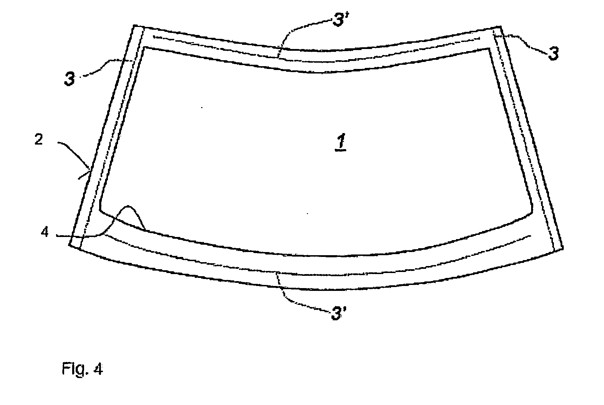

La Fig. 4 montre une vitre 1 constituant un pare-brise de véhicule pourvue de deux lignes d'affaiblissement 3 et 3' s'étendant le long de son bord extérieur 2 et indiquées par une ligne en pointillé. Les deux groupes de lignes 3 et 3' ne se rejoignent pas de façon à laisser plus de résistance au pare-brise en cas de choc. Les lignes d'affaiblissement sont recouvertes par une bande de peinture colorée opaque 4. Le vitrage a bien deux groupes de deux lignes d'affaiblissement (le groupe des deux lignes 3 d'une part et le groupe des deux lignes 3' d'autre part). A l'intérieure des deux groupes, chaque ligne est oblique à travers la tranche, c'est-à-dire par rapport à la normale au vitrage au même endroit que la ligne.

## Revendications

1. Procédé pour produire des zones de rupture intentionnellement prévues dans une vitre, dans lequel on provoque des surchauffes locales de la structure du verre à l'aide d'un faisceau énergétique pénétrant dans le verre, dans lequel on produit les zones de rupture intentionnellement prévues (5) en guidant séquentiellement le faisceau selon un tracé prédéterminé (ligne 3) suivant le tracé préféré de la rupture de la vitre (1) ainsi qu'en focalisant séquentiellement le faisceau aussi bien le long de ce tracé (ligne 3) qu'à différentes profondeurs par rapport à la surface de la vitre (1), **caractérisé en ce que** la focalisation séquentielle à différentes profondeurs de pénétration suit une ligne inclinée et/ou courbe par rapport à la normale à la surface du verre de telle façon que l'on crée dans la vitre une structure d'affaiblissement, afin d'obtenir un comportement de rupture de la vitre (1) différent en fonction de la direction d'action de la sollicitation conduisant à la rupture.

2. Procédé selon la revendication précédente, **caractérisé en ce que** la structure d'affaiblissement est en forme de cône ou coin.

3. Procédé selon la revendication 1, **caractérisé en ce que** l'on produit les zones de rupture intentionnellement prévues (5) dans au moins deux lignes situées l'une en face de l'autre et enfermant entre elles une région de la surface de la vitre (1).

4. Procédé selon la revendication 1 ou 2, **caractérisé en ce qu'**une zone d'affaiblissement périphérique (3) est formée au total par les zones de rupture intentionnellement prévues (5).

5. Procédé selon la revendication 1 ou 2 ou 3, **caractérisé en ce que** l'on arrange les zones de rupture intentionnellement prévues (5) de façon continue ou discontinue le long du tracé (ligne 3).

6. Procédé selon l'une quelconque des revendications précédentes, **caractérisé en ce que** l'on munit de zones de rupture intentionnellement prévues une ou plusieurs vitres intégrées ou à intégrer dans une vitre feuilletée.

7. Procédé selon l'une quelconque des revendications précédentes, **caractérisé en ce que** l'on crée les microfissures formant les zones de rupture intentionnellement prévues dans la masse du verre sans dégrader une ou les deux surfaces du verre.

8. Procédé selon l'une quelconque des revendications précédentes 1 à 5, **caractérisé en ce que** l'on produit des microfissures sortant sur au moins une surface de la vitre.

9. Procédé selon l'une quelconque des revendications précédentes, **caractérisé en ce que** l'on masque à la vue les zones de rupture intentionnellement prévues ou les zones d'affaiblissement de la vitre.

10. Procédé selon l'une quelconque des revendications précédentes, **caractérisé en ce que** l'on utilise un laser avec une longueur d'onde de 1064 nm ou de 532 nm.

11. Procédé selon l'une quelconque des revendications précédentes, **caractérisé en ce que** le rayonnement énergétique présente les propriétés suivantes: une énergie ou une puissance, qui n'est pas suffisante pour produire un dommage visible (à l'oeil nu), mais qui produit dans ou sur le verre un dommage initial, qui peut évoluer en une fissure, ou aussi en un dommage visible dans le verre, sous une nouvelle exposition à un rayonnement énergétique ou à une sollicitation thermique, chimique ou mécanique.

12. Procédé selon l'une quelconque des revendications précédentes, **caractérisé en ce qu'**un rayonnement énergétique ou ionisant dans ou sur une matière au moins partiellement transparente pour ce type de rayonnement en vue de créer des zones de rupture intentionnellement prévues, des zones d'affaiblissement ou des défauts conduit, par la constitution chimique ou physique ciblée de l'environnement local de l'endroit à traiter, à un rayonnement focalisé, à une émission stimulée ou à un super-rayonnement et de ce fait à une densité de rayonnement locale accrue dans la région à traiter.

13. Vitre (1) avec au moins une zone d'affaiblissement (3) favorisant une rupture le long d'un tracé de rupture prédéterminé en cas de surcharge de la vitre, qui a été produite par la création de microfissures à l'aide d'un rayonnement énergétique, en particulier avec un procédé selon l'une quelconque des revendications précédentes, dans laquelle cette zone d'affaiblissement (3), considérée en coupe transversale à travers l'épaisseur de la vitre (1), a un tracé incliné par rapport à la normale à la surface du verre et/ou un tracé courbe.

14. Vitre selon la revendication précédente, dont la zone d'affaiblissement (3) est formée par au moins deux lignes enfermant entre elles une région de la surface de la vitre et se poursuivant en particulier jusqu'aux arêtes de la vitre.

15. Vitre selon l'une des revendications de vitre précédentes, dont la zone d'affaiblissement (3) décrit une ligne périphérique à distance du bord extérieur, de telle façon qu'il en résulte un débris de rupture ayant un contour de rupture sensiblement en forme de cône ou coin.

16. Vitre selon l'une des revendications de vitre précédentes, dans laquelle la zone d'affaiblissement (3) comporte des microfissures (5) sortant sur au moins une face pour produire une réaction de rupture préférée.

17. Utilisation d'une vitre de l'une des revendications de vitre précédentes comme pare-brise courbe dans un véhicule à moteur, dans laquelle des zones d'affaiblissement (5) situées l'une en face de l'autre sont orientées en sens contraire et divergent de la face convexe à la face concave de la vitre (1), de telle façon que cette dernière soit relativement souple en cas de rupture à la suite du choc d'un corps provenant du côté extérieur.

## Claims

1. A method for producing deliberate rupture zones in a window, in which method the structure of the glass is subjected to local overheating using a high-energy beam penetrating the glass, in which deliberate rupture zones (5) are produced by sequentially guiding the beam in a predetermined path (line 3) along the preferred path for the window (1) to break along and by sequentially focusing the beam both along this path (line 3) and at various depths relative to the surface of the window (1), **characterized in that** the sequential focusing at various penetration depths follows a line that is inclined and/or curved relative to the normal to the surface of the glass so that a weakened structure is created in the window in order to obtain rupture behavior of the window (1) that differs according to the direction in which the influence leading to rupture acts.

2. The method as claimed in the preceding claim, **characterized in that** the weakened structure is cone- or wedge-shaped.

3. The method as claimed in claim 1, **characterized in that** deliberate rupture zones (5) are produced in at least two lines situated one facing the other and bounding between them a region of the surface of the window (1).

4. The method as claimed in claim 1 or 2, **characterized in that** a peripheral weakened zone (3) is formed in total by the deliberate rupture zones (5).

5. The method as claimed in claim 1 or 2 or 3, **characterized in that** the deliberate rupture zones (5) are arranged continuously or discontinuously along the path (line 3).

6. The method as claimed in any one of the preceding claims, **characterized in that** one or more windows built into or to be built into a laminated window pane is or are provided with deliberate rupture zones.

7. The method as claimed in any one of the preceding claims, **characterized in that** the microcracks that form the deliberate rupture zones are created in the mass of the glass without degrading either or both surfaces of the glass.

8. The method as claimed in any one of the preceding claims 1 to 5, **characterized in that** microcracks that open onto at least one surface of the glass are produced.

9. The method as claimed in any one of the preceding claims, **characterized in that** the deliberate rupture zones or the weakened zones of the glass are concealed from sight.

10. The method as claimed in any one of the preceding claims, **characterized in that** use is made of laser with a wavelength of 1064 nm or 532 nm.

11. The method as claimed in any one of the preceding claims, **characterized in that** the high-energy radiation has the following properties: an energy or power that is not high enough to produce damage that is visible (to the naked eye) but which produces, in or on the glass, initial damage, which may evolve into a crack, or also into visible damage in the glass, under further exposure to high-energy radiation or to thermal, chemical or mechanical stress.

12. The method as claimed in any one of the preceding claims, **characterized in that** high-energy or ionizing radiation in or on a material that is at least partially transparent to this type of radiation so as to create deliberate rupture zones, weakened zones or defects leads, as a result of the targeted physical or chemical makeup of the local environment of the area to be treated, to focused radiation, to stimulated emission or to superradiation and therefore leads to a local radiation density that is increased in the region to be treated.

13. A window (1) with at least one weakened zone (3) encouraging rupture along a predetermined rupture path if the window is overloaded, which rupture is produced by the creation of microcracks using high-energy radiation, particularly using a method as claimed in any one of the preceding claims, in which window this weakened zone (3), considered in cross section through the thickness of the window (1) has a path that is inclined relative to the normal of the surface of the glass and/or a curved path.

14. The window as claimed in the preceding claim, the weakened zone (3) of which is formed of at least two lines bounding between them a region of the surface of the window and continuing in particular as far as the edges of the window.

15. The window as claimed in one of the preceding window claims, the weakened zone (3) of which describes a peripheral line some distance from the outer edge, such that it results in rupture debris the rupture outline of which is more or less cone- or wedge-shaped.

16. The window as claimed in one of the preceding window claims, in which the weakened zone (3) has microcracks (5) opening onto at least one face in order to produce a preferred rupture reaction.

17. The use of a window of one of the preceding window claims as a curved windshield in a motor vehicle, in which weakened zones (5) situated one facing the other are directed in opposite directions and diverge from the convex face to the concave face of the window (1) such that the latter is relatively flexible in the event of rupture following impact with a body arriving from the outermost side.

## Patentansprüche

1. Verfahren zum Herstellen von Sollbruchstellen in einer Glasscheibe, bei dem mithilfe einer energiereichen, in das Glas eindringenden Strahlung lokale Überhitzungen der Struktur des Glases erzeugt werden, wobei die Sollbruchstellen (5) durch sequentielles Führen der Strahlung nach einem vorgegebenen, dem bevorzugten Verlauf des Bruchs der Glasscheibe (1) folgenden Verlauf (Linie 3) sowie durch sequentielles Fokussieren der Strahlung sowohl entlang diesem Verlauf (Linie 3) als auch in unterschiedlichen Tiefen bezüglich der Oberfläche der Glasscheibe (1) erzeugt werden, **dadurch gekennzeichnet, dass** die sequentielle Fokussierung in unterschiedlichen Eindringtiefen einer gegenüber der Normalen auf der Glasoberfläche geneigten Linie und/oder einer gekrümmten Linie derart folgt, dass insgesamt betrachtet eine keilförmige Schwächungsstruktur in die Glasscheibe eingebracht wird, um ein je nach Einwirk-Richtung der zum Bruch führenden Beanspruchung unterschiedliches Bruchverhalten der Glasscheibe (1) zu erzielen.

2. Verfahren nach Anspruch 1, **dadurch gekennzeichnet, dass** die Schwächungsstruktur kegelförmig oder winkelförmig ist.

3. Verfahren nach Anspruch 1, **dadurch gekennzeichnet, dass** die Sollbruchstellen (5) in mindestens zwei einander gegenüber liegenden Linien erzeugt werden, die zwischen sich einen Oberflächenbereich der Glasscheibe (1) einschließen.

4. Verfahren nach Anspruch 1 oder 2, **dadurch gekennzeichnet, dass** durch die Sollbruchstellen (5) insgesamt eine umlaufende Schwächungszone (3) gebildet ist.

5. Verfahren nach Anspruch 1 oder 2, **dadurch gekennzeichnet, dass** die Sollbruchstellen (5) entlang dem Verlauf (Linie 3) kontinuierlich oder diskontinuierlich angelegt werden.

6. Verfahren nach einem der vorstehenden Ansprüche, **dadurch gekennzeichnet, dass** man eine oder mehrere in einer Verbundscheibe integrierte oder zu integrierende Glasscheiben mit Sollbruchstellen (5) versieht.

7. Verfahren nach einem der vorstehenden Ansprüche, **dadurch gekennzeichnet, dass** man die die Sollbruchstellen erzeugenden Mikrorisse (5) in der Glasmasse ohne Beeinträchtigung einer oder beider Glasoberflächen einbringt.

8. Verfahren nach einem der vorstehenden Ansprüche 1 bis 6, **dadurch gekennzeichnet, dass** man auf mindestens einer Oberfläche der Glasscheibe austretende Mikrorisse (5) erzeugt.

9. Verfahren nach einem der vorstehenden Ansprüche, **dadurch gekennzeichnet, dass** man die Sollbruchstellen (5) oder Schwächungszonen (3) der Glasscheibe optisch kaschiert.

10. Verfahren nach einem der vorstehenden Ansprüche, **dadurch gekennzeichnet, dass** man einen Laser mit einer Wellenlänge von 1064 nm oder 532 nm verwendet.

11. Verfahren nach einem der vorstehenden Ansprüche, **dadurch gekennzeichnet, dass** die energiereiche Strahlung folgende Merkmale hat: eine Energie oder eine Leistung, die nicht genügt, um einen (für das bloße Auge) sichtbaren Schaden zu erzeugen, jedoch in oder auf dem Glas einen Anfangsschaden erzeugt, der sich zu einem Riss entwickeln kann unter einer erneuten Einwirkung der energiereichen Strahlung oder bei einer thermischen, chemischen oder mechanischen Beanspruchung.

12. Verfahren nach einem der vorstehenden Ansprüche, **dadurch gekennzeichnet, dass** energiereiche oder ionisierende Strahlung in oder auf wenigstens teilweise für diese Art von Strahlung transparentes Material zur Erreichung von Sollbruchstellen, Schwächungszonen oder Fehlstellen durch geeignete chemische oder physikalische Gestaltung der lokalen Umgebung der zu bearbeitenden Stelle zu fokussierter Strahlung, stimulierter Emission oder Superstrahlung führt und damit zu erhöhter lokaler Strahlungsdichte in dem zu bearbeitenden Gebiet führt.

13. Glasscheibe (1) mit mindestens einer bei Überlastung der Glasscheibe einen Bruch entlang einem vorgegebenen Bruchverlauf begünstigenden Schwächungszone (3), welche durch Einbringen von Mikrorissen mithilfe energiereicher Strahlung, insbesondere mit einem Verfahren nach einem der vorstehenden Patentansprüche, erzeugt wurde, wobei diese Schwächungszone (3) im Querschnitt durch die Dicke der Glasscheibe (1) betrachtet einen gegenüber der Normalen auf der Glasoberfläche geneigten und/oder einen gekrümmten Verlauf hat.

14. Glasscheibe nach dem vorstehenden Anspruch, deren Schwächungszone (3) durch mindestens zwei zwischen sich einen Oberflächenbereich der Glasscheibe einschließenden und sich insbesondere bis zu den Kanten der Glasscheibe fortsetzenden Linien gebildet ist.

15. Glasscheibe nach einem der vorstehenden Produktansprüche, deren Schwächungszone (3) eine mit Abstand vom äußeren Rand umlaufende Linie beschreibt, so dass sich eine Bruchscherbe mit etwa keilförmigem Bruchumriss ergibt.

16. Glasscheibe nach einem der vorstehenden Produktansprüche, bei der die Schwächungszone (3) auf mindestens einer Flächenseite zur Erzielung einer bevorzugten Bruchreaktion austretende Mikrorisse (5) umfasst.

17. Verwendung einer Glasscheibe nach einem der vorstehenden Produktansprüche als gebogene Windschutzscheibe in einem Kraftfahrzeug, in der einander gegenüber liegende Schwächungszonen (5) gegenläufig orientiert sind und von der konvexen Flächenseite zur konkaven Flächenseite der Glasscheibe (1) divergieren, so dass letztere bei einem Bruch infolge des Aufpralls eines Körpers von der Außenseite her vergleichsweise nachgiebig ist.
